# EUROPÄISCHE PATENTSCHRIFT

(11) **EP 4 139 233 B1**
(45) Veröffentlichungstag und Bekanntmachung des Hinweises auf die Patenterteilung: **21.05.2025**
(21) Anmeldenummer: 21704169.8
(22) Anmeldetag: 28.01.2021
(51) Int. Cl.: B65G 27/02, B65G 27/24, B65G 43/02, G05B 23/02

(54) **ANTRIEBSVORRICHTUNG FÜR EINE SCHWINGFÖRDERVORRICHTUNG, VERWENDUNG DER ANTRIEBSVORRICHTUNG IN EINER SCHWINGFÖRDERVORRICHTUNG UND VERFAHREN ZUR ÜBERPRÜFUNG DER FUNKTIONSFÄHIGKEIT EINER ENTSPRECHENDEN SCHWINGFÖRDERVORRICHTUNG**
DRIVE DEVICE FOR A VIBRATORY CONVEYOR, USE OF THE DRIVE DEVICE IN A VIBRATORY CONVEYOR AND METHOD FOR CHECKING THE FUNCTIONALITY OF A CORRESPONDING VIBRATORY CONVEYOR
DISPOSITIF D'ENTRAÎNEMENT POUR UN TRANSPORTEUR VIBRANT, UTILISATION DU DISPOSITIF D'ENTRAÎNEMENT DANS UN TRANSPORTEUR VIBRANT ET PROCÉDÉ PERMETTANT DE VÉRIFIER LA FONCTIONNALITÉ D'UN TRANSPORTEUR VIBRANT CORRESPONDANT

(30) Priorität: 21.04.2020 CH 4662020
(43) Veröffentlichungstag der Anmeldung: 01.03.2023
(73) Patentinhaber: Krämer AG, 8303 Bassersdorf (CH)
(72) Erfinder: RÜTTI, Mario, 8308 Illnau (CH); FRECH, Tobias, 8600 Dübendorf (CH); FISCHER, Horst, 79787 Lauchringen (DE)
(74) Vertreter: Lusuardi, Werther
(86) Internationale Anmeldenummer: PCT/CH2021/050002
(87) Internationale Veröffentlichungsnummer: WO 2021/212241

(56) Entgegenhaltungen:
- WO-A1-02/28751
- CA-A1- 3 031 151
- CN-A- 107 352 227
- DE-A1- 102018 203 814
- DE-U1- 202008 006 747
- DE-U1- 202011 101 642
- US-A1- 2003 111 323

## Beschreibung

Die Erfindung bezieht sich auf ein Verfahren zur Überprüfung der Funktionsfähigkeit einer Schwingfördervorrichtung und auf eine Antriebsvorrichtung für eine Schwingfördervorrichtung

Das Dokument CN 107 352 227 A offenbart eine Antriebsvorrichtung für eine Schwingfördervorrichtung, wobei die Antriebsvorrichtung umfasst: a) ein Gestell mit einer an einem unteren Ende des Gestells angeordneten Grundplatte und mehreren auf auf der Grundplatte peripher in einem Teilkreis angeordneten sich in Richtung einer Längsachse erstreckenden Stützen; b) eine Ankerplatte, welche an einem oberen Ende des Gestells angeordnet ist und mittels je einem ersten Federpaket mit je einer Stütze horizontal und vertikal schwingbar verbunden ist; c) einen mit der Ankerplatte gekoppelten Beschleunigungssensor; d) einen Magnetantrieb, welcher unterhalb der Ankerplatte und von dieser beabstandet angeordnet ist und ein Gegengewicht umfasst, so dass die Ankerplatte durch magnetische Kraftübertragung in Schwingung bringbar ist, wobei e) die ersten Federpakete im Ruhezustand der Antriebsvorrichtung einen Winkel a > 90° mit der Ankerplatte einschliessen, so dass die durch den Magnetantrieb ausgeübte Antriebskraft auf die Ankerplatte in horizontale und vertikale Komponenten aufteilbar ist.

Eine Schwingfördervorrichtung zum Entstauben und Entgraten von Tabletten ist aus dem Dokument EP 1 322 533 B1 KRÄMER bekannt. Diese bekannte Schwingfördervorrichtung umfasst im Wesentlichen eine wendelförmige Förderrinne, eine Antriebsvorrichtung, mittels welcher die Förderrinne in eine Vibration versetzt wird, und eine Absaugvorrichtung zum Absaugen von Staub aus dem Bereich der Förderrinne.

Bei dieser bekannten Schwingfördervorrichtung können allerdings Fehler an der Förderrinne oder ein aufgrund von langen Stillstandszeiten verursachtes schwieriges Anlaufverhalten der Schwingfördervorrichtung beim Starten der Vorrichtung nicht unmittelbar erfasst und berücksichtigt werden. Zudem kann es im Betrieb der Schwingfördervorrichtung zu Fehlerzuständen kommen, welche die Antriebsvorrichtung und Förderrinne beschädigen können.

Hier will die Erfindung Abhilfe schaffen. Der Erfindung liegt die Aufgabe zugrunde, ein Verfahren zur Herstellung einer Zustandsanalyse der Schwingfördervorrichtung zu schaffen um anschliessend eine Aussage über die Funktionsfähigkeit treffen zu können. Die Erfindung löst die gestellte Aufgabe mit einem Verfahren zur Überprüfung der Funktionsfähigkeit einer Schwingfördervorrichtung, welches die Merkmale des Anspruchs 1 aufweist, sowie mit einer Antriebsvorrichtung für eine Schwingfördervorrichtung, welche die Merkmale des Anspruchs 8 aufweist.

Die durch die Erfindung erreichten Vorteile sind im Wesentlichen darin zu sehen, dass dank dem erfindungsgemässen Verfahren:
A) vor dem Betrieb:
   - aufgrund des Vergleichs der Impulsantwort mit einer Referenzimpulsantwort Mängel an der Förderrinne, wie z.B. eine nicht korrekte Montage der Förderrinne oder eine Kontrolle der Federrate beim Starten der Schwingfördervorrichtung erfassbar sind, so dass in solchen Fällen ein Einschalten der Antriebsvorrichtung verhindert werden kann; und
   - Störungen des Anlaufverhaltens der Antriebsvorrichtungen, welche aufgrund langer Stillstandszeiten auftreten können, erfassbar ist. Es kann bei solchen Schwingfördervorrichtungen zu langen Stillstandszeiten kommen, wodurch die Antriebsvorrichtung ein differenziertes Anlaufverhalten aufweisen kann. Bei bekannten Schwingfördervorrichtungen wird dieses Verhalten jedoch von der Steuerung nicht berücksichtigt, wodurch es zu erhöhten mechanischen Beanspruchungen der Vorrichtung und so zu deren Defekt kommen kann. Anhand der Auswertung der Impulsantwort kann dieser Umstand frühzeitig ermittelt und beim Einschalten der Schwingfördervorrichtung berücksichtigt werden.
B) während dem Betrieb die erfassten Werte für die Parameter Spannungsamplitude, Frequenz, Beschleunigung und Temperatur weiter verwendet werden können für, z.B.:
   - einen Vergleich der erfassten Werte für die Parameter mit Toleranzbändern, so dass entschieden werden kann, ob der Betrieb der Schwingfördervorrichtung weitergeführt oder mit Abgabe einer Fehlermeldung ausgesetzt werden soll; und/oder
   - nach dem Betrieb die erfassten Werte für die Parameter mit gespeicherten Langzeitdaten verglichen werden können, so dass eine tendenzielle Veränderung erkannt werden kann und entschieden werden kann, ob ein Warnhinweis ausgegeben wird oder ob eine spätere Inbetriebnahme standardmässig erfolgen kann.

Nachfolgend wird eine Anzahl für die Erfindung wichtigen technischen Begriffen wie folgt näher definiert:

### Impulsantwort (111)

Als Impulsantwort wird im nachfolgenden das Ausgangssignal einer schwingfähigen Vorrichtung bezeichnet, bei welcher als Eingangssignal ein Nadelimpuls (Dirac-Impuls) angelegt wird.

Erfindungsgemäss soll anhand eines Impulses (Eingangssignal) die Ausgangsgrösse, d.h. die Impulsantwort erzeugt werden. Dabei ist die Anregung stossartig, also im Vergleich zur Schwingzeit der Vorrichtung äusserst kurz. Die Einheitsimpulsfunktion (Eingangssignal) besteht aus einem angenähertem Nadelimpuls (Dirac-Impuls). Obwohl sich ein solcher Nadelimpuls physikalisch nicht exakt realisieren lässt, kann aus dem Antwortverhalten (Ausgangsgrösse) bei Anregungen mit kurzem Impuls und hoher Amplitude eine Aussage hinsichtlich dynamischer Eigenschaften wie Eigenfrequenz und Dämpfung abgelesen werden.

Wenn alle Förderwendeln korrekt montiert sind, keine Veränderung in der Federrate und keine Langzeitschäden an der Antriebsvorrichtung vorhanden sind, dann befindet sich die Schwingfördervorrichtung im Normalzustand. Durch das Zuführen des obengenannten Impulses (Eingangssignal), kann das Ausschwingverhalten (Ausgangsgrösse) erfasst und analysiert werden. Dieses Verhalten gilt nun als Referenzverhalten - dies gilt sowohl im Zeit- wie auch Frequenzbereich. Wenn nun keine Förderrinne (Förderwendel) an der Antriebsvorrichtung montiert ist, ist das Schwingverhalten nach dem zugeführten und vordefinierten Impuls anders, als wenn die Förderrinne (Förderwendel) montiert ist. Sobald also die Impulsantwort (Ausgangsgrösse) der Schwingfördervorrichtung vom Referenzverhalten abweicht, muss von einem Fehlerzustand ausgegangen werden.

Anhand der eindeutigen Charakterisierung der Fehlerzustände (welche auch Daten aus anderer Quelle beinhaltet) kann daraus der entsprechende Fehler abgeleitet und mitgeteilt werden.

### Toleranzband (121)

Bei der Ansteuerung der Erregerspule handelt es sich um ein geregeltes System, welches durch das Feedback des Beschleunigungssensors auf veränderbare Schwingungsamplituden (durch mehr Masse auf dem Wendel) reagieren kann in dem die Spannungsamplitude an der Spule durch den Frequenzumrichter angepasst wird. Durch äusserliche Systemfehler wie eine gebrochene Schweissnaht am Wendel oder überschreiten der max. Füllmenge im Wendel, kann es zu einer falschen Amplitudenregelung und dadurch zu Defekten in der Antriebsvorrichtung kommen. Durch den Vergleich der aktuellen Spannungsamplitude mit einem vordefinierten Toleranzband, kann ein solches Fehlverhalten frühzeitig erkannt werden. Gleiches gilt auch für die Ausgangsfrequenz des Frequenzumrichters. Neben der Spannungsamplitude und Frequenz wird auch die aktuelle Beschleunigung mit einem vordefinierten Toleranzband verglichen, um eine mögliche Fehlfunktion des Beschleunigungssensors frühzeitig zu erkennen.

### Parametervergleich (131)

Als Parametervergleich wird im nachfolgenden das Weiterverarbeiten und Kombinieren von erfassten Zustandsgrössen aus unterschiedlichen Datenquellen bezeichnet, mit dem Ziel eine Tendenz zur Annäherung des erfassten Parameters an dessen Toleranzbandgrenze zu erkennen.

Beispielsweise wird der Temperaturverlauf der Spule über die Lebensdauer analysiert, sodass eine Aussage bezüglich der notwendigen Serviceintervalle getroffen werden kann und so die Funktionsfähigkeit der Schwingfördervorrichtung langfristig gewährleistet ist.

### OPC UA (141)

Als OPC UA (Open Platform Communications United Architecture) wird der von der OPC Foundation eingeführte Standard für einen plattformunabhängigen und serviceorientierten (SOA) Datenaustausch bezeichnet.

Durch diese neu ausgewerteten Daten kann die Schwingfördervorrichtung (Entstauber) vor Beschädigungen, Folgeschäden und unsachgemässer Bedienung geschützt werden. Zudem kann die Prozesssicherheit durch "predictive maintenance" massgeblich verbessert werden.

Erfindungsgemäß wird nach Schritt A5) der folgende Schritt ausgeführt: A6) Aktivierung der Startprozedur für einen Betrieb mit reduzierter oder ohne reduzierter Startantriebsleistung der Schwingfördervorrichtung. Bei der Aktivierung der Startprozedur für einem Betrieb mit reduzierter Startantriebsleistung kann ein durch eine lange Stillstandszeit verursachtes erschwertes Anlaufverhalten der Vorrichtung berücksichtigt werden. Ein Defekt der Vorrichtung durch erhöhte mechanische Beanspruchung beim Starten der Antriebsvorrichtung kann somit verhindert werden.

In einer weiteren Ausführungsform wird durch die Startprozedur die Antriebsleistung der Antriebsvorrichtung reduziert und nach einer Zeitdauer Δt > 0 auf 100% erhöht. Damit ist der Vorteil erreichbar, dass anhand der Auswertung der Impulsantwort ein durch eine lange Stillstandszeit verursachtes erschwertes Anlaufverhalten der Vorrichtung beim Einschalten der Schwingfördervorrichtung berücksichtigt werden kann, indem automatisch die Antriebsleistung, zum Beispiel auf 50% reduziert wird. Nach diesem sogenannten "Softstart" kann die Leistung nach einer vordefinierten Zeit auf 100% erhöht werden. Durch diese Massnahme wird verhindert, dass die Schwingfördervorrichtung durch die langen Stillstandzeiten beschädigt wird.

In einer anderen Ausführungsform wird die Antriebsleistung der Antriebsvorrichtung auf höchstens 80%, vorzugsweise auf höchstens 50% reduziert.

In einer weiteren Ausführungsform umfasst das Verfahren vor Schritt A1) den folgenden Schritt: AO) Generieren einer Referenzimpulsantwort durch Aufbringen eines kurzzeitigen Antriebsimpulses auf eine Antriebsvorrichtung der Schwingfördervorrichtung, wobei die Antriebsvorrichtung keinen erhöhten mechanischen Beanspruchungen ausgesetzt ist.

In einer weiteren Ausführungsform ist die unter Schritt A2) durch die Schwingfördervorrichtung verursachte Impulsantwort in Abhängigkeit der Zeit oder in Abhängigkeit der Frequenz der Impulsantwort mittels einem an der Schwingfördervorrichtung angeordneten Beschleunigungssensor erfassbar.

Erfindungsgemäß werden nach Schritt B2) im Betrieb der Schwingfördervorrichtung die folgenden Schritte ausgeführt: B3) Vergleichen der erfassten Parameter mit jeweils vordefinierten Toleranzbändern mittels des Computers; und B4) Ermitteln mittels des Computers ob: (i) der Betrieb der Schwingfördervorrichtung ohne Einschränkungen weitergeführt wird, oder (ii) der Betrieb der Schwingfördervorrichtung mit einer Fehlermeldung ausgesetzt werden soll. Die Vorteile dieser Toleranzbänder sind insbesondere, dass
- Mängel an der Schwingfördervorrichtung, wie z.B. Schweissnahtbrüche, zu hohe Füllmenge oder Fehlerzustände des Beschleunigungssensors erfassbar sind. Bewegen sich die erfassten Parameter Spannungsamplitude, Frequenz und Beschleunigung des Erregersystems ausserhalb der jeweiligen vordefinierten Toleranzbänder, muss von einem potenziellen Fehlerzustand ausgegangen werden, welcher die Antriebsvorrichtung beschädigen kann. Durch die Überwachung der Parameter kann ein Abschalten zum Schutz der Antriebsvorrichtung vor der Beschädigung eingeleitet werden; und
- Ein Überhitzen der Spule durch permanente Überwachung der Temperatur an der Erregerspule verhindert wird.

In einer anderen Ausführungsform werden nach dem Betrieb der Schwingfördervorrichtung die folgenden Schritte ausgeführt: C1) Vergleichen der unter Schritt B3) und B4) im Betrieb der Schwingfördervorrichtung erfassten und an den Computer weitergeleiteten durch die Schwingfördervorrichtung verursachten Parameter wie Spannungsamplitude, Frequenz, Beschleunigung und Temperatur mit gespeicherten Langzeitdaten mittels des Computers; und C2) Ermitteln mittels des Computers ob: a) eine tendenzielle Veränderung der Parameter erkennbar ist und ein Warnhinweis ausgegeben werden soll; oder b) der Betrieb standardmässig weitergeführt werden kann. Die durch diesen Parametervergleich erreichbaren Vorteile sind darin zu sehen, dass:
- die aktuellen Betriebsparameter mit den Referenzparametern verglichen werden, um somit den Istzustand für den weiteren Betrieb zu definieren. Hier werden die Werte mit den im Versuch ermittelten Referenzparametern verglichen im Hinblick auf Temperaturverlauf, Beschleunigung, Spannungsamplitude und Frequenz;
- anhand eines Parametervergleichs die Prozesssicherheit gesteigert werden kann, indem über einen längeren Zeitraum eine Veränderung eines Parameters hin zu dessen Toleranzbandgrenze erkannt werden kann, auch wenn sich der Wert aktuell noch im zulässigen Toleranzbereich befindet. Eine solche Veränderung kann somit, im Gegensatz zum Verfahren im Betrieb, frühzeitig erkannt und Massnahmen eingeleitet werden; und
- ein grosses Potenzial für weiterführende Entwicklungsprojekte und kundenspezifische Anwendungen analysiert werden kann, indem man die ermittelten Daten und Erkenntnisse aller gebauten Entstauber zusammenträgt.

In einer weiteren Ausführungsform umfasst das Verfahren die weiteren Schritte: D1) Bereitstellen der ermittelten Parameter und Daten des Computers an ein übergeordnetes Betriebssystem via OPC UA; und D2) Erfassen des Dateneingangs vom übergeordneten Betriebssystem. Die Vorteile einer Übermittlung der Daten via UPC UA liegen vor allem darin, dass
- die ermittelten Prozessparameter und Daten mit OPC UA an übergeordnete Betriebssysteme übergeben werden können und dadurch auch synchrone Zeitstempel über die Schnittstellengrenze hinaus vorhanden sind; und
- Fehlermeldungen, dazugehörende Dokumente zur Fehlerbehebung, Betriebsanleitungen und Arbeitsanweisungen sowie allfällige Informationen zur Prozessoptimierung auf dem übergeordneten System angezeigt werden können.

In einer besonderen Ausführungsform der Antriebsvorrichtung beträgt der Winkel **α** mindestens 120°, vorzugsweise mindestens 105°.

In einer weiteren Ausführungsform der Antriebsvorrichtung ist das Gegengewicht aus einer wählbaren Anzahl von Einzelgewichten zusammensetzbar. Damit ist der Vorteil erreichbar, dass durch die Hinzugabe oder Wegnahme von Einzelgewichten die komplette Antriebsvorrichtung so zusammengesetzt werden kann, dass spezifische Gegengewichte für die unterschiedlichen Förderhöhen von 800 bis 2'000 mm montiert werden können.

In einer weiteren Ausführungsform umfasst die Antriebsvorrichtung zusätzlich einen Frequenzumrichter zum Aufbringen eines Antriebsimpulses, eine Signalauswerteeinheit zum Erfassen der durch eine Förderrinne verursachten Impulsantwort und einen Computer.

Eine bevorzugte Verwendung der erfindungsgemässen Antriebsvorrichtung ist deren Anordnung in einer Schwingfördervorrichtung zum Entstauben und/oder Entgraten von Tabletten und Kapseln.

Die Erfindung und Weiterbildungen der Erfindung werden im Folgenden anhand der teilweise schematischen Darstellungen eines Ausführungsbeispiels noch näher erläutert.

Es zeigen:
Fig. 1a eine schematische Darstellung einer Ausführungsform des erfindungsgemässen Verfahrens zur Überprüfung der Funktionsfähigkeit einer Schwingfördervorrichtung mittels einer Zustandsanalyse vor dem Betrieb;
Fig. 1b eine schematische Darstellung einer Ausführungsform des erfindungsgemässen Verfahrens zur Überprüfung der Funktionsfähigkeit einer Schwingfördervorrichtung mittels je einer Zustandsanalyse während des Betriebs und nach dem Betrieb;
Fig. 2 eine Seitenansicht einer Schwingfördervorrichtung zusammen mit einer Ausführungsform der erfindungsgemässen Antriebsvorrichtung;
Fig. 3 eine perspektivische Darstellung der in Fig. 2 dargestellten Ausführungsform der erfindungsgemässen Antriebsvorrichtung; und
Fig. 4 eine schematische Darstellung der in Fig. 2 dargestellten Ausführungsform der erfindungsgemässen Antriebsvorrichtung zusammen mit den Peripheriegeräten.

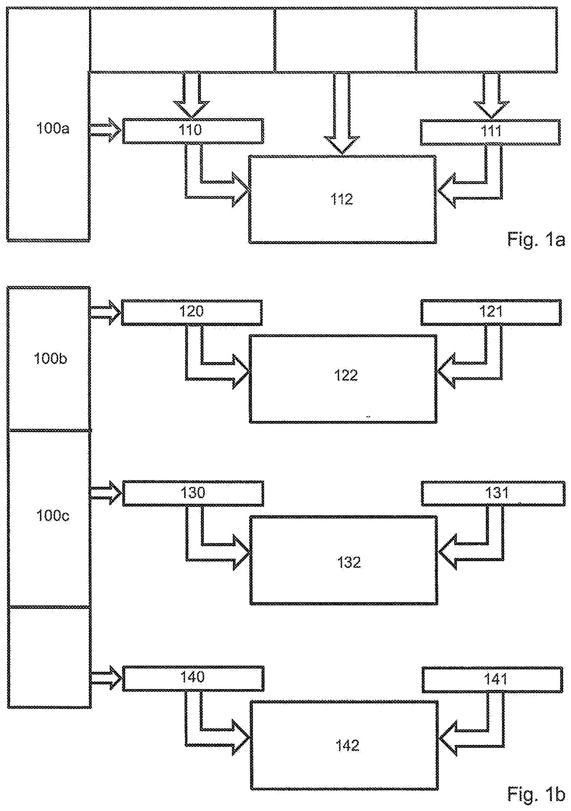

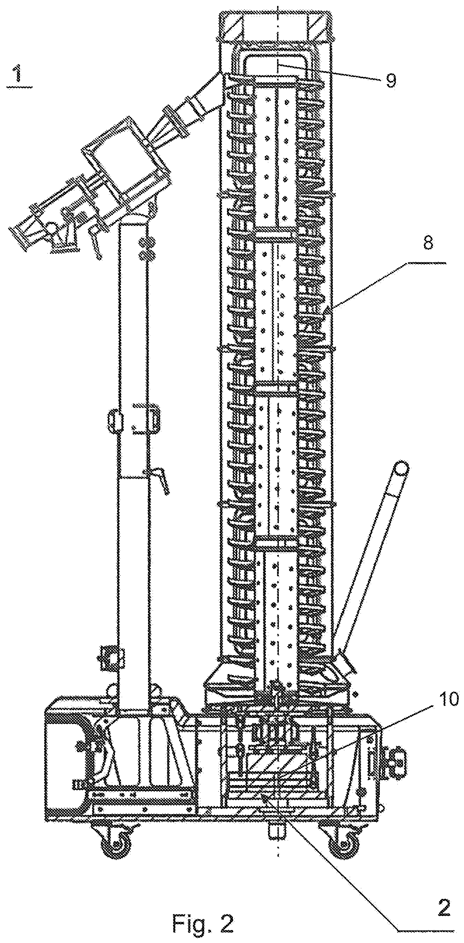

In Fig. 1a ist beispielhaft eine Ausführungsform des erfindungsgemässen Verfahrens zur Überprüfung der Funktionsfähigkeit einer Schwingfördervorrichtung 1 (Fig. 2) mittels einer Zustandsanalyse 100a vor dem Betrieb dargestellt.

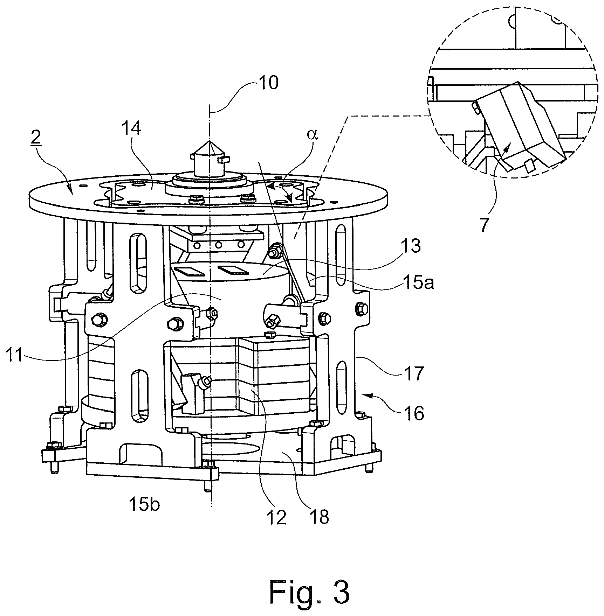

Das Verfahren 110 vor dem Betrieb zeichnet sich dadurch aus, dass anhand eines definierten Antriebsimpulses auf die Antriebsvorrichtung 2 (Fig. 2 und 3) der Schwingfördervorrichtung 1 und der Analyse der daraus folgenden Impulsantwort eine Aussage über den Zustand der Schwingfördervorrichtung 1 unmittelbar vor dem Betrieb getroffen wird.

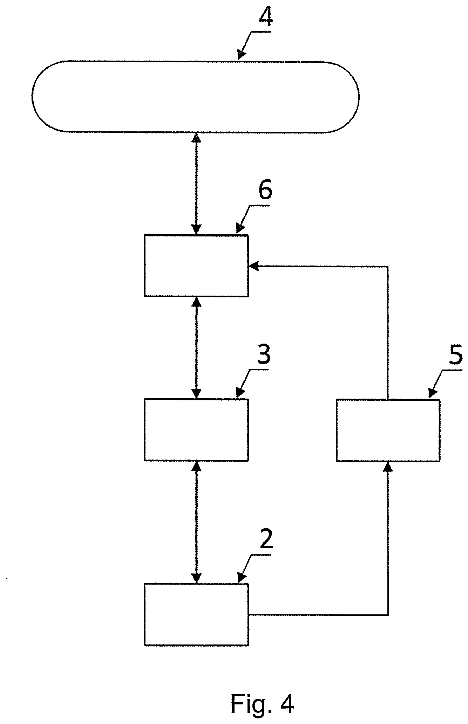

Das vor dem Betrieb durchzuführende Verfahren 110 umfasst im Wesentlichen die folgenden Schritte:
- Aufbringen eines Antriebsimpulses auf eine Antriebsvorrichtung 2 der Schwingfördervorrichtung 1 vor dem Betrieb der Schwingfördervorrichtung 1 mittels eines Frequenzumrichters 3 (Fig. 4);
- Erfassen der durch die Schwingfördervorrichtung 1 verursachten Impulsantwort in Abhängigkeit der Zeit oder in Abhängigkeit der Frequenz der Impulsantwort mittels einer Signalauswerteeinheit 5;
- Weiterleiten der erfassten Impulsantwort durch die Signalauswerteeinheit 5 an den Computer 6 (Fig. 4);
- Vergleichen der erfassten Impulsantwort mit einer Referenzimpulsantwort 111 mittels des Computers 6; und
- Zuletzt wird mittels des Computers 6 ermittelt ob:
   a) eine Startprozedur für einen Betrieb mit reduzierter Startantriebsleistung der Schwingfördervorrichtung 1 aktiviert werden soll, oder
   b) eine Startprozedur für einen Betrieb ohne reduzierte Startantriebsleistung der Schwingfördervorrichtung 1 aktiviert werden soll, oder
   c) der Betrieb ausgesetzt werden soll.

Dabei werden mittels der erfassten Impulsantwort die folgenden Zustandsdaten 112 erfasst:
- Zustand der Förderrinne 8;
- Kontrolle der Federrate der Schwingfördervorrichtung 1; und
- Mögliche Materialermüdung.

In Fig. 1b ist eine Ausführungsform des erfindungsgemässen Verfahrens 120 zur Überprüfung der Funktionsfähigkeit einer Schwingfördervorrichtung 1 mittels einer Zustandsanalyse 100b während des Betriebs dargestellt. Im Betrieb der Schwingfördervorrichtung 1 werden mittels der Signalauswerteeinheit 5 die durch die Schwingfördervorrichtung 1 verursachten Parameter wie Spulentemperatur der Antriebsvorrichtung 2, Beschleunigung, Frequenz und Spannungsamplitude im Betrieb der Schwingfördervorrichtung 1 erfasst und stetig überwacht. Ferner werden die erfasste Spannungsamplitude, Frequenz, Beschleunigung und Temperatur durch die Signalauswerteinheit 5 an den Computer 6 weitergeleitet.

Erfindungsgemäß umfasst das Verfahren 120 im Betrieb der Schwingfördervorrichtung 1 zusätzlich die folgenden Schritte:
- Vergleichen der erfassten Parameter mit jeweils vordefinierten Toleranzbändern 121 mittels des Computers 6; und
- Ermitteln mittels des Computers 6 ob:
   a) der Betrieb der Schwingfördervorrichtung 1 ohne Einschränkungen weitergeführt werden soll, oder
   b) der Betrieb der Schwingfördervorrichtung 1 mit einer Fehlermeldung ausgesetzt werden soll.

Die Überprüfung der Funktionsfähigkeit wird anhand vordefinierter Toleranzbänder 121 der jeweiligen Parameter gewährleistet. Ferner werden aus den erfassten Parametern weitere Zustandsdaten 122, z.B. Zustand der Schweissnaht und/oder die Füllmenge in der Schwingfördervorrichtung 1 ermittelt.

Ebenfalls beispielhaft, und nicht einschränkend, wird zusätzlich das Verfahren 130 zur Überprüfung der Funktionsfähigkeit einer Schwingfördervorrichtung 1 (Fig. 2) mittels einer Zustandsanalyse 100c nach dem Betrieb ausgeführt, welches die folgenden Schritte umfasst:
- Vergleichen der im Betrieb der Schwingfördervorrichtung 1 erfassten und an den Computer 6 weitergeleiteten durch die Schwingfördervorrichtung 1 verursachten Parameter wie Spannungsamplitude, Frequenz, Beschleunigung und Temperatur mit gespeicherten Langzeitdaten 131 mittels des Computers 6; und
- Ermitteln mittels des Computers 6 ob:
   a) eine tendenzielle Veränderung der Parameter erkennbar ist und ein Warnhinweis ausgegeben werden soll; oder
   b) der Betrieb standardmässig weitergeführt werden kann.

Die Zustandsanalyse unmittelbar nach dem Betrieb umfasst einen Parametervergleich und dient in erster Linie dazu die erfassten aktuellen Antriebsparameter mit den jeweiligen Startwerten zu vergleichen und eine Aussage über den abgeschlossenen Betrieb zu treffen. Zudem wird auch eine Aussage über den aktuellen Zustand getroffen und es werden wiederum weitere Zustandsdaten 132 zur Beurteilung der Prozesssicherheit, Serviceintervallen, mögliches Entwicklungspotential und Kundenspezifische Projekte bereitgestellt.

Anhand der Kommunikationsschnittstelle 140 werden die Daten via OPC UA 141 (Open Platform Communications United Architecture) an ein übergeordnetes Betriebssystem 4 weitergeleitet, womit der Benutzer über den aktuellen Zustand der Schwingfördervorrichtung 1 oder mögliche zukünftig auftauchende Fehlerzustände informiert werden kann. Als weitere Zustandsdaten 142 werden Zeitstempel, Prozessparameter, Fehlermeldungen und Dokumentation übermittelt.

In Fig. 2 ist eine Schwingfördervorrichtung 1 mit einer Ausführungsform der erfindungsgemässen Antriebsvorrichtung 2 dargestellt, wobei die Schwingfördervorrichtung 1 eine zu einer Zentralachse 9 koaxiale helixförmige Förderrinne 8 und unterhalb der Förderrinne 8 eine Antriebsvorrichtung 2 mit einer zur Zentralachse 9 kolinearen Längsachse 10 umfasst. Zum Entgraten und Entstauben werden Tabletten oder Kapseln den Einlass der Förderrinne 8 zugeführt und wandern durch die Schwingungen entlang der Förderrinne 8 nach oben, wo sie die Schwingfördervorrichtung 1 schliesslich durch den Auslass wieder verlassen. Auf diesem Weg werden die Tabletten oder Kapseln ordentlich durchvibriert und reiben sich dabei aneinander und an den Wandungen der Förderrinne 8, wobei sie durch diese mechanische Beanspruchung allfällige Grate verlieren.

In Fig. 3 ist eine Ausführungsform der erfindungsgemässen Antriebsvorrichtung 2 dargestellt, welche im Wesentlichen ein Gestell 16 mit einer sich im Betrieb der Antriebsvorrichtung 2 in Vertikalrichtung erstreckenden Längsachse 10, einer Grundplatte 18 und mehreren auf der Grundplatte 18 peripher in einem Teilkreis angeordneten sich in Richtung der Längsachse 10 erstreckenden Stützen 17, eine Ankerplatte 14, welche an einem oberen Ende des Gestells 16 angeordnet ist und mittels je einem ersten Federpaket 15a mit je einer Stütze 17 horizontal und vertikal schwingbar verbunden ist, einen Magnetantrieb 13, welcher unterhalb der Ankerplatte 14 und von dieser beabstandet angeordnet ist, ein Gegengewicht 11 umfasst und mittels je einem zweiten Federpaket 15b mit je einer Stütze 17 verbunden ist, so dass die Ankerplatte 14 durch magnetische Kraftübertragung in Schwingung bringbar ist. Die magnetische Kraftübertragung vom Magnetantrieb 13 auf die Ankerplatte 14 erfolgt über eine Anzahl in oder an der Ankerplatte 14 angeordnete Permanentmagnete (nicht gezeichnet) Die ersten und zweiten Federpakete 15a,15b schliessen im Ruhezustand der Antriebsvorrichtung 2 beispielhaft, und nicht einschränkend, einen Winkel α von ca. 105° mit der Ankerplatte 14 ein, so dass die durch den Magnetantrieb 13 ausgeübte Antriebskraft auf die Ankerplatte 14 in horizontale und vertikale Komponenten aufgeteilt wird. Die Förderrinne 8 wird mittels des Magnetantriebs 13 durch die Kraftübertragung auf die Ankerplatte 14 in Schwingung gebracht. Die Federpakete 15, an denen Förderrinne 8 und Gegengewicht 11 aufgehängt sind, sind in einem festen Winkel zur Antriebsebene der Magnetspule montiert. Im Verhältnis des Winkels Federpaket 15 / Ankerplatte 14 resultiert bei kleinen Amplituden eine Aufteilung der Antriebskräfte auf die Ankerplatte 14 in waagrechter und senkrechter Richtung. Ferner ist an den Befestigungselementen der Ankerplatte 14, an welchen die ersten Federpakete 15a befestigt sind, ein Beschleunigungssensor 7 angebracht.

Der mechanische Aufbau der Antriebsvorrichtung 2 basiert auf einem Gegengewicht 11. Der Schwingkräfteausgleich erfolgt somit über das Gegengewicht-System. Hier schwingt die Masse - die Förderrinne 8 - genau entgegengesetzt zur zweiten Masse - dem Gegengewicht 11. Durch diesen Ausgleich wird eine Übertragung der Schwingkräfte auf das Aussengehäuse auf ein Minimum reduziert. Der Magnetantrieb 13 ist komplett mit einem Temperaturfühler (nicht gezeichnet) im Gegengewicht 11 vergossen.

Wie in Fig. 4 gezeigt umfasst die Antriebsvorrichtung 2 in dieser Ausführungsform zusätzlich einen Frequenzumrichter 3 zum Aufbringen des Antriebsimpulses, ein übergeordnetes Betriebssystem 4, eine Signalauswerteeinheit 5 zum Erfassen der Impulsantwort und einen Computer 6, der zur Ausführung des oben dargestellten erfindungsgemässen Verfahrens geeignet programmiert ist.

Der Computer 6 umfasst eine OPC UA Schnittstelle (Open Platform Communications United Architecture) zur Verbindung mit einem übergeordneten Betriebssystem 4, so dass die Schwingfördervorrichtung 1 unabhängig von Herstellern, Programmiersprachen und Betriebssystemen eingesetzt werden kann. Die Schwingfördervorrichtung 1 kann somit an jede OPC UA Tablettenpresse, sowie auch an übergeordnete Leitsysteme angeschlossen werde ohne Änderungen durchführen zu müssen. Die einheitlichen Schnittstellen ermöglichen den einfachen und schnellen Zugriff auf Daten und Anwendungen und vereinfachen die Übermittlung von Alarmen und Audit-Trails. Ferner ermöglicht die einfache und sichere Übermittlung und Sammlung von Daten der Antriebsvorrichtung 2 eine Verbesserung der Predictive Maintenance. Mit Hilfe der ermittelten Antriebsdaten, wie zum Beispiel dem Frequenzbereich oder der Schwingungsamplitude, können Wartungsinformationen abgeleitet werden, so dass proaktiv gewartet und eine allfällige Ausfallszeit minimiert werden kann. Im Optimalfall kann eine Störung oder eine fehlerhafte Bedienung vorhergesagt werden, bevor es zu Auswirkungen oder Ausfällen kommt.

Durch den Computer 6 wird unter anderem die durch die Signalauswerteeinheit 5 erfasste Impulsantwort ausgewertet, so dass sich beispielsweise bereits vor dem Betrieb der Zustand der Förderrinne 8 - z.B. ob vorhanden oder nur zum Teil montiert - erkennen und feststellen ob der Wendelturm mit der Förderrinne 8 korrekt aufgebaut ist. Des Weiteren kann nicht nur die korrekte Montage des Wendelturms überprüft werden, sondern es können auch Informationen über die Füllmenge der Förderrinne 8 gewonnen werden.

Die Förderrinne 8 Schwingfördervorrichtung 1 kann mit einem Leerfahrmodus komplett entleert werden. Hierzu kann entsprechendes vibrationsarmes Leerfahrprogramm für unterschiedliche Tabletten oder Kapseln angewählt werden und die Förderrinne 8 der Schwingfördervorrichtung 1 im Niedrigfrequenzbereich komplett leer gefahren werden.

## Patentansprüche

1. Verfahren zur Überprüfung der Funktionsfähigkeit einer Schwingfördervorrichtung (1) mit einer Antriebsvorrichtung (2) nach einem der Ansprüche 8-12 mittels einer Zustandsanalyse die entweder vor dem Betrieb oder während des Betriebs der Schwingfördervorrichtung (1) durchgeführt wird, wobei
A) das vor dem Betrieb durchzuführende Verfahren folgende Schritte umfasst:
A1) Aufbringen eines Antriebsimpulses auf die Antriebsvorrichtung (2) der Schwingfördervorrichtung (1) vor dem Betrieb der Schwingfördervorrichtung (1) mittels eines Frequenzumrichters (3);
A2) Erfassen der durch die Schwingfördervorrichtung (1) verursachten Impulsantwort in Abhängigkeit der Zeit oder in Abhängigkeit der Frequenz der Impulsantwort mittels einer Signalauswerteeinheit (5);
A3) Weiterleiten der erfassten Impulsantwort durch die Signalauswerteeinheit (5) an einen Computer (6);
A4) Vergleichen der erfassten Impulsantwort mit einer Referenzimpulsantwort mittels des Computers (6);
A5) Ermitteln mittels des Computers (6) ob:
a) eine Startprozedur für einen Betrieb mit reduzierter Startantriebsleistung der Schwingfördervorrichtung (1) aktiviert werden soll, oder
b) eine Startprozedur für einen Betrieb ohne reduzierte Startantriebsleistung der Schwingfördervorrichtung (1) aktiviert werden soll, oder
c) der Betrieb ausgesetzt werden soll; und
A6) Aktivierung der Startprozedur für einen Betrieb mit reduzierter oder ohne reduzierter Startantriebsleistung der Schwingfördervorrichtung (1);
B) das während des Betriebs durchzuführende Verfahren folgende Schritte umfasst:
B1) Erfassen der durch die Schwingfördervorrichtung (1) verursachten Spannungsamplitude, Frequenz, Beschleunigung und Temperatur im Betrieb der Schwingfördervorrichtung (1) mittels der Signalauswerteeinheit (5); und
B2) Weiterleiten der erfassten Spannungsamplitude, Frequenz, Beschleunigung und Temperatur durch die Signalauswerteinheit (5) an einen Computer (6);
B3) Vergleichen der erfassten Parameter mit jeweils vordefinierten Toleranzbändern mittels des Computers (6); und
B4) Ermitteln mittels des Computers (6) ob:
(i) der Betrieb der Schwingfördervorrichtung (1) ohne Einschränkungen weitergeführt wird, oder
(ii) der Betrieb der Schwingfördervorrichtung (1) mit einer Fehlermeldung ausgesetzt werden soll.

2. Verfahren nach Anspruch 1, **dadurch gekennzeichnet, dass** durch die Startprozedur die Antriebsleistung der Antriebsvorrichtung (2) reduziert wird und nach einer Zeitdauer Δt > 0 auf 100% erhöht wird.

3. Verfahren nach Anspruch 1 oder 2, **dadurch gekennzeichnet, dass** die Antriebsleistung der Antriebsvorrichtung (2) auf höchstens 80%, vorzugsweise auf höchstens 50% reduziert wird.

4. Verfahren nach einem der Ansprüche 1 bis 3, **dadurch gekennzeichnet, dass** das Verfahren vor Schritt A1) den folgenden Schritt umfasst:
AO) Generieren einer Referenzimpulsantwort durch Aufbringen eines kurzzeitigen Antriebsimpulses auf eine Antriebsvorrichtung (2) der Schwingfördervorrichtung (1), wobei die Antriebsvorrichtung (2) keinen erhöhten mechanischen Beanspruchungen ausgesetzt ist.

5. Verfahren nach einem der Ansprüche 1 bis 4, **dadurch gekennzeichnet, dass** die unter Schritt A2) durch die Schwingfördervorrichtung (1) verursachte Impulsantwort in Abhängigkeit der Zeit oder in Abhängigkeit der Frequenz der Impulsantwort mittels einem an der Schwingfördervorrichtung (1) angeordneten Beschleunigungssensor (7) erfassbar ist.

6. Verfahren nach Anspruch 1, **dadurch gekennzeichnet, dass** nach dem Betrieb der Schwingfördervorrichtung (1) die folgenden Schritte ausgeführt werden:
C1) Vergleichen der unter Schritt B3) und B4) im Betrieb der Schwingfördervorrichtung (1) erfassten und an den Computer (6) weitergeleiteten durch die Schwingfördervorrichtung (1) verursachten Parameter wie Spannungsamplitude, Frequenz, Beschleunigung und Temperatur mit gespeicherten Langzeitdaten mittels des Computers (6); und
C2) Ermitteln mittels des Computers (6) ob:
a) eine tendenzielle Veränderung der Parameter erkennbar ist und ein Warnhinweis ausgegeben werden soll; oder
b) der Betrieb standardmässig weitergeführt werden kann.

7. Verfahren nach einem der Ansprüche 1 bis 6, **gekennzeichnet durch** die weiteren Schritte:
D1) Bereitstellen der ermittelten Parameter und Daten des Computers (6) an ein übergeordnetes Betriebssystem (4) via OPC UA; und
D2) Erfassen des Dateneingangs vom übergeordneten Betriebssystem (4).

8. Antriebsvorrichtung (2) für eine - Schwingfördervorrichtung (1), wobei Antriebsvorrichtung (2) umfasst:
a) ein Gestell (16) mit einer an einem unteren Ende des Gestells (16) angeordneten Grundplatte (18) und mehreren auf der Grundplatte (18) peripher in einem Teilkreis angeordneten sich in Richtung einer Längsachse (10) erstreckenden Stützen (17);
b) eine Ankerplatte (14), welche an einem oberen Ende des Gestells (16) angeordnet ist und mittels je einem ersten Federpaket (15a) mit je einer Stütze (17) horizontal und vertikal schwingbar verbunden ist;
c) einen mit der Ankerplatte (14) gekoppelten Beschleunigungssensor (7); und
d) einen Magnetantrieb (13), welcher unterhalb der Ankerplatte (14) und von dieser beabstandet angeordnet ist, ein Gegengewicht (11) umfasst und mittels je einem zweiten Federpaket (15b) mit je einer Stütze (17) verbunden ist, so dass die Ankerplatte (14) durch magnetische Kraftübertragung in Schwingung bringbar ist, wobei
e) die ersten und zweiten Federpakete (15a,15b) im Ruhezustand der Antriebsvorrichtung (2) einen Winkel α > 90° mit der Ankerplatte (14) einschliessen, so dass die durch den Magnetantrieb (13) ausgeübte Antriebskraft auf die Ankerplatte (14) in horizontale und vertikale Komponenten aufteilbar ist.

9. Antriebsvorrichtung (2) nach Anspruch 8, **dadurch gekennzeichnet, dass** der Winkel α mindestens 120° beträgt, vorzugsweise mindestens 105°.

10. Antriebsvorrichtung (2) nach Anspruch 8 oder 9, **dadurch gekennzeichnet, dass** das Gegengewicht (11) aus einer wählbaren Anzahl von Einzelgewichten (12) zusammensetzbar ist.

11. Antriebsvorrichtung (2) nach einem der Ansprüche 8 bis 10, **dadurch gekennzeichnet, dass** die Antriebsvorrichtung (2) zusätzlich einen Frequenzumrichter (3) zum Aufbringen eines Antriebsimpulses, eine Signalauswerteeinheit (5) zum Erfassen der durch eine Förderrinne (8) verursachten Impulsantwort und einen Computer (6) umfasst.

12. Verwendung der Antriebsvorrichtung (2) gemäss einem der Ansprüche 8 bis 11 in einer Schwingfördervorrichtung (1) zum Entstauben und/oder Entgraten von Tabletten und Kapseln.

## Claims

1. Method for checking the functionality of a vibratory conveyor device (1) with a drive device (2) according to one of claims 8 - 12 by means of a condition analysis which is carried out either before operation or during operation of the vibratory conveyor device (1), wherein
A) the method to be carried out before operation comprises the following steps:
A1) applying a drive pulse to the drive device (2) of the vibratory conveyor device (1) prior to operation of the vibratory conveyor device (1) by means of a frequency converter (3);
A2) detecting the impulse response caused by the vibratory conveyor device (1) as a function of the time or as a function of the frequency of the impulse response by means of a signal evaluation unit (5);
A3) forwarding the detected impulse response by the signal evaluation unit (5) to a computer (6);
A4) comparing the detected impulse response with a reference impulse response by means of the computer (6);
A5) determining by means of the computer (6) whether:
a) a starting procedure for an operation with reduced starting drive power of the vibratory conveyor device (1) is to be activated, or
b) a start procedure for an operation without reduced start drive power of the vibratory conveyor device (1) is to be activated, or
c) operation is to be suspended; and
A6) activating the start procedure for an operation with reduced or without reduced start drive power of the vibratory conveyor device (1);
B) the method to be performed during operation comprises the following steps:
B1) detecting the voltage amplitude, frequency, acceleration and temperature caused by the vibratory conveyor device (1) during operation of the vibratory conveyor device (1) by means of the signal evaluation unit (5); and
B2) forwarding the detected voltage amplitude, frequency, acceleration and temperature by the signal evaluation unit (5) to a computer (6);
B3) comparing the recorded parameters with predefined tolerance bands in each case by means of the computer (6); and
B4) determining by means of the computer (6) whether:
(i) the operation of the vibratory conveyor device (1) is continued without restrictions, or
(ii) the operation of the vibratory conveyor device (1) is to be suspended with an error message.

2. Method according to claim 1, **characterized in that** the drive power of the drive device (2) is reduced by the starting procedure and is increased to 100% after a period of time Δt > 0.

3. Method according to claim 1 or 2, **characterized in that** the drive power of the drive device (2) is reduced to a maximum of 80%, preferably to a maximum of 50%.

4. Method according to one of claims 1 to 3, **characterized in that** the method comprises the following step before step A1):
AO) generating a reference impulse response by applying a short-time drive impulse to a drive device (2) of the vibratory conveyor device (1), wherein the drive device (2) is not subjected to any increased mechanical stresses.

5. Method according to one of claims 1 to 4, **characterized in that** the impulse response caused by the vibratory conveyor device (1) in step A2) can be detected as a function of time or as a function of the frequency of the impulse response by means of an acceleration sensor (7) arranged on the vibratory conveyor device (1).

6. Method according to claim 1, **characterized in that** the following steps are carried out after operation of the vibratory conveyor device (1):
C1) comparing the parameters such as voltage amplitude, frequency, acceleration and temperature caused by the vibratory conveyor device (1) and recorded under steps B3) and B4) during operation of the vibratory conveyor device (1) and forwarded to the computer (6) with stored long-term data by means of the computer (6); and
C2) determining by means of the computer (6) whether:
a) a trend change in the parameters is recognizable and a warning should be issued; or
b) operation can be continued as standard.

7. Method according to one of claims 1 to 6, **characterized by** the further steps:
D1) providing the determined parameters and data of the computer (6) to a higher-level operating system (4) via OPC UA; and
D2) acquiring the data input from the higher-level operating system (4).

8. Drive device (2) for a vibrating conveyor device (1), wherein the drive device (2) comprises
a) a frame (16) having a base plate (18) arranged at a lower end of the frame (16) and a plurality of supports (17) arranged peripherally on the base plate (18) in a pitch circle and extending in the direction of a longitudinal axis (10);
b) an anchor plate (14), which is arranged at an upper end of the frame (16) and is connected by means of a first spring assembly (15a) to a respective support (17) so as to be horizontally and vertically oscillatable;
c) an acceleration sensor (7) coupled to the anchor plate (14); and
d) a magnetic drive (13), which is arranged below the armature plate (14) and at a distance therefrom, comprises a counterweight (11) and is connected to a respective support (17) by means of a second spring assembly (15b), so that the armature plate (14) can be caused to vibrate by magnetic force transmission, wherein
e) the first and second spring assemblies (15a, 15b) enclose an angle α > 90° with the armature plate (14) in the rest state of the drive device (2), so that the drive force exerted by the magnetic drive (13) on the armature plate (14) can be divided into horizontal and vertical components.

9. Drive device (2) according to claim 8, **characterized in that** the angle α is at least 120°, preferably at least 105°.

10. Drive device (2) according to claim 8 or 9, **characterized in that** the counterweight (11) can be composed of a selectable number of individual weights (12).

11. Drive device (2) according to one of claims 8 to 10, **characterized in that** the drive device (2) additionally comprises a frequency converter (3) for applying a drive pulse, a signal evaluation unit (5) for detecting the impulse response caused by a conveyor trough (8) and a computer (6).

12. Use of the drive device (2) according to one of claims 8 to 11 in an oscillating conveyor device (1) for dedusting and/or deburring tablets and capsules.

## Revendications

1. Procédé de contrôle de l'aptitude au fonctionnement d'un dispositif de transport vibrant (1) avec un dispositif d'entraînement (2) selon l'une des revendications 8 à 12 au moyen d'une analyse d'état qui est effectuée soit avant le fonctionnement, soit pendant le fonctionnement du dispositif de transport vibrant (1), dans lequel
A) le procédé à mettre en œuvre avant le fonctionnement comprend les étapes suivantes :
A1) Application d'une impulsion d'entraînement au dispositif d'entraînement (2) du dispositif vibrant (1) avant le fonctionnement du dispositif vibrant (1) au moyen d'un convertisseur de fréquence (3) ;
A2) Saisir la réponse impulsionnelle provoquée par le dispositif vibrant de transport (1) en fonction du temps ou en fonction de la fréquence de la réponse impulsionnelle au moyen d'une unité d'évaluation de signaux (5) ;
A3) Transmission de la réponse impulsionnelle détectée par l'unité d'évaluation des signaux (5) à un ordinateur (6) ;
A4) Comparer la réponse impulsionnelle détectée à une réponse impulsionnelle de référence au moyen de l'ordinateur (6) ;
A5) Déterminer au moyen de l'ordinateur (6) si :
a) une procédure de démarrage pour un fonctionnement avec une puissance d'entraînement de démarrage réduite du dispositif vibrant (1) doit être activée, ou
b) une procédure de démarrage pour un fonctionnement sans puissance d'entraînement de démarrage réduite du dispositif vibrant (1) doit être activée, ou
c) le fonctionnement doit être suspendu ; et
A6) activer la procédure de démarrage pour un fonctionnement avec une puissance d'entraînement de démarrage réduite ou sans puissance d'entraînement de démarrage réduite du dispositif vibrant (1) ;
B) le procédé à mettre en œuvre pendant le fonctionnement comprend les étapes suivantes :
B1) détecter l'amplitude de tension, la fréquence, l'accélération et la température provoquées par le dispositif vibrant (1) pendant le fonctionnement du dispositif vibrant (1) au moyen de l'unité d'évaluation de signaux (5) ; et
B2) transmettre l'amplitude de tension, la fréquence, l'accélération et la température détectées par l'unité d'évaluation de signaux (5) à un ordinateur (6) ;
B3) comparer les paramètres détectés à des bandes de tolérance prédéfinies respectives au moyen de l'ordinateur (6) ; et
B4) déterminer au moyen de l'ordinateur (6) si :
(i) le fonctionnement du convoyeur vibrant (1) se poursuit sans restrictions, ou bien
(ii) le fonctionnement du dispositif vibrant (1) doit être suspendu avec un message d'erreur.

2. Procédé selon la revendication 1, **caractérisé en ce que**, par la procédure de démarrage, la puissance d'entraînement du dispositif d'entraînement (2) est réduite et, après une durée Δt > 0, est augmentée à 100%

3. Procédé selon la revendication 1 ou 2, **caractérisé en ce que** la puissance d'entraînement du dispositif d'entraînement (2) est réduite à 80% au maximum, de préférence à 50% au maximum.

4. Procédé selon l'une des revendications 1 à 3, **caractérisé en ce que** le procédé comprend, avant l'étape A1), l'étape suivante :
AO) Générer une réponse impulsionnelle de référence en appliquant une impulsion d'entraînement de courte durée à un dispositif d'entraînement (2) du dispositif vibrant (1), le dispositif d'entraînement (2) n'étant pas soumis à des contraintes mécaniques accrues.

5. Procédé selon l'une des revendications 1 à 4, **caractérisé en ce que** la réponse impulsionnelle provoquée par le dispositif vibrant (1) à l'étape A2) peut être détectée en fonction du temps ou en fonction de la fréquence de la réponse impulsionnelle au moyen d'un capteur d'accélération (7) disposé sur le dispositif vibrant (1).

6. Procédé selon la revendication 1, **caractérisé en ce qu'**après le fonctionnement du dispositif de transport vibrant (1), les étapes suivantes sont exécutées :
C1) comparer, au moyen de l'ordinateur (6), les paramètres tels que l'amplitude de tension, la fréquence, l'accélération et la température, provoqués par le dispositif vibrant (1), détectés lors des étapes B3) et B4) pendant le fonctionnement du dispositif vibrant (1) et transmis à l'ordinateur (6) ; et
C2) déterminer au moyen de l'ordinateur (6) si :
a) une modification tendancielle des paramètres est reconnaissable et un avertissement doit être émis ; ou
b) le fonctionnement peut être poursuivi de manière standard.

7. Procédé selon l'une des revendications 1 à 6, **caractérisé par** les étapes supplémentaires suivantes :
D1) mise à disposition des paramètres et données déterminés de l'ordinateur (6) à un système d'exploitation supérieur (4) via OPC UA ; et
D2) saisie de l'entrée de données du système d'exploitation de niveau supérieur (4).

8. Dispositif d'entraînement (2) pour un dispositif de transport à vibrations (1), le dispositif d'entraînement (2) comprenant :
a) un châssis (16) avec une plaque de base (18) disposée à une extrémité inférieure du châssis (16) et plusieurs supports (17) disposés sur la plaque de base (18) à la périphérie dans un cercle partiel s'étendant dans la direction d'un axe longitudinal (10) ;
b) une plaque d'ancrage (14) qui est disposée à une extrémité supérieure du bâti (16) et qui est reliée de manière oscillante horizontalement et verticalement à un support (17) au moyen d'un premier paquet de ressorts (15a) ;
c) un capteur d'accélération (7) couplé à la plaque d'ancrage (14) ; et
d) un entraînement magnétique (13) qui est disposé au-dessous de la plaque d'ancrage (14) et à distance de celle-ci, qui comprend un contrepoids (11) et qui est relié à un support (17) au moyen d'un deuxième paquet de ressorts (15b) respectif, de sorte que la plaque d'ancrage (14) peut être mise en oscillation par transmission de force magnétique, dans lequel
e) les premier et deuxième paquets de ressorts (15a, 15b) forment un angle α > 90° avec la plaque d'ancrage (14) lorsque le dispositif d'entraînement (2) est au repos, de sorte que la force d'entraînement exercée par l'entraînement magnétique (13) sur la plaque d'ancrage (14) peut être divisée en composantes horizontale et verticale.

9. Dispositif d'entraînement (2) selon la revendication 8, **caractérisé en ce que** l'angle α est d'au moins 120°, de préférence d'au moins 105°.

10. Dispositif d'entraînement (2) selon la revendication 8 ou 9, **caractérisé en ce que** le contrepoids (11) peut être composé d'un nombre sélectionnable de poids individuels (12).

11. Dispositif d'entraînement (2) selon l'une des revendications 8 à 10, **caractérisé en ce que** le dispositif d'entraînement (2) comprend en outre un convertisseur de fréquence (3) pour appliquer une impulsion d'entraînement, une unité d'évaluation de signal (5) pour détecter la réponse impulsionnelle provoquée par une goulotte de transport (8) et un ordinateur (6).

12. Utilisation du dispositif d'entraînement (2) selon l'une des revendications 8 à 11 dans un dispositif de transport vibrant (1) pour le dépoussiérage et/ou l'ébarbage de comprimés et de capsules.
